# EUROPÄISCHE PATENTSCHRIFT

(11) **EP 1 432 904 B1**
(45) Veröffentlichungstag und Bekanntmachung des Hinweises auf die Patenterteilung: **21.11.2007**
(21) Anmeldenummer: 02754436.0
(22) Anmeldetag: 25.07.2002
(51) Int. Cl.: F02D 41/24, F02D 21/08

(54) **VERFAHREN UND VORRICHTUNG ZUR STEUERUNG EINER BRENNKRAFTMASCHINE**
METHOD AND DEVICE FOR CONTROLLING AN INTERNAL COMBUSTION ENGINE
PROCEDE ET DISPOSITIF POUR REGULER UN MOTEUR A COMBUSTION INTERNE

(30) Priorität: 20.09.2001 DE 10146317
(43) Veröffentlichungstag der Anmeldung: 30.06.2004
(73) Patentinhaber: ROBERT BOSCH GMBH, 70442 Stuttgart (DE)
(72) Erfinder: GERWING, Wolfram, 74394 Hessigheim (DE); FORTHMANN, Stefan, 71640 Ludwigsburg (DE)
(86) Internationale Anmeldenummer: PCT/DE2002/002732
(87) Internationale Veröffentlichungsnummer: WO 2003/027471

(56) Entgegenhaltungen:
- EP-A- 0 791 736
- EP-A- 1 052 387
- DE-A- 19 528 696
- DE-A- 19 920 498
- JP-A- 63 140 855
- JP-A- 63 140 859
- US-A- 4 601 809
- US-A- 5 857 446
- US-A- 6 131 439

## Beschreibung

### Stand der Technik

Die Erfindung betrifft ein Verfahren und eine Vorrichtung zur Steuerung einer Brennkraftmaschine.

Aus der DE 195 286 96 ist ein Verfahren und eine Vorrichtung zur Steuerung einer Brennkraftmaschine bekannt, bei denen ausgehend von der Abweichung der tatsächlich eingespritzten Kraftstoffmenge und der gewünschten Kraftstoffmenge Korrekturwerte zur Korrektur der einzuspritzenden Kraftstoffmenge vorgegeben werden. Dabei wird die eingespritzte Kraftstoffmenge ausgehend von einer mit einer Lambda-Sonde gemessenen Größe, die die Sauerstoffkonzentration im Abgas charakterisiert, und der mittels eines Sensors gemessene Luftmenge bestimmt.

Desweiteren ist aus der DE 199 204 98 ein Verfahren und eine Vorrichtung zur Steuerung der Abgasrückführung bekannt, bei der das Ansteuersignal ausgehend von einer Differenzluftmenge bestimmt wird.

In der EP 1052387 A2 ist ein Verfahren zum Betreiben einer Abgasrückführeinrichtung einer Brennkraftmaschine beschrieben. Dabei wird die Abgasrückführrate als Istwert erfasst und mit einem Sollwert verglichen. Eine Regelung der Sauerstoffkonzentration und eine Korrektur des Sauerstoffkonzentrationssignal zeigt diese Entgegenhaltung nicht.

Gemäss der US-A-46 01 809 wird eine Lambda-Sonde zur Regelung einer Brennkraftmaschine eingesetzt, bei Kraftstoffabschaltung wird die Sonde kalibriert.

Es sind Verfahren und Vorrichtungen zur Steuerung einer Brennkraftmaschine bekannt, bei denen ausgehend von dem Vergleich eines Sollwertes mit einem Istwert für eine Größe, die die zugeführte Sauerstoffmenge charakterisiert, eine Stellgröße zur Ansteuerung eines Stellelementes vorgegeben wird, das die der Brennkraftmaschine zugeführte Kraftstoffmenge und/oder die der Brennkraftmaschine zugeführte Sauerstoffmenge beeinflußt. Insbesondere wird eine Stellelement angesteuert, das den Anteil an rückgeführten Abgas beeinflußt. Üblicherweise erfolgt diese Steuerung derart, dass der Brennkraftmaschine die Menge an Sauerstoff zugeführt wird, die für eine optimierte Verbrennung notwendig ist. Die restliche Gasmenge wird durch Abgas aufgefüllt.

Bei den Vorgehensweisen gemäß dem Stand der Technik ist hierzu ein Luftmassensensor erforderlich. Dieser steht nicht bei allen Systemen zur Verfügung. Insbesondere bei LKW-Systemen steht dieser aus Kostengründen bzw. der Ungenauigkeiten bei der Messung der großen Luftmassen nicht zur Verfügung. Erfindungsgemäß ist ein Verfahren zur Steuerung einer Brennkraftmaschine vorgesehen wobei ausgehend von dem Vergleich eines Sollwertes mit einem Istwert für eine Größe, die die zugeführte Sauerstoffmenge charakterisiert, eine Stellgröße zur Ansteuerung eines Stellelementes vorgegeben wird, das die der Brennkraftmaschine zugeführte Kraftstoffmenge und/oder die der Brennkraftmaschine zugeführte Sauerstoffmenge beeinflusst, dadurch gekennzeichnet, dass ein Referenzwert abhängig von Drehzahl und eingespritzter Kraftstoffmenge vorgegeben wird und dass in bestimmten Betriebszuständen ein Korrekturwert ausgehend von der Abweichung zwischen einer Messgröße, die die Sauerstoffkonzentration im Abgas charakterisiert, und dem Referenzwert ermittelt wird und dass die Messgröße mit dem Korrekturwert korrigiert wird.

Sowie eine entsprechende Vorrichtung, gemäß Anspruch 8.

Als Referenzwert wird bevorzugt die Messgröße verwendet, die bei einer Referenzbrennkraftmaschine bei entsprechenden Bedingungen auftritt.

Dies bedeutet in den bestimmten Betriebszuständen, in denen die Meßgröße aussagekräftig und/oder zuverlässig erfaßbar ist, wird die Meßgröße erfaßt und mit dem Referenzwert verglichen. Ausgehend von diesem Vergleich wird der Korrekturwert bestimmt, der die Abweichung zwischen der Meßgröße und dem Referenzwert angibt. In den bestimmten Betriebszuständen wird die Abweichung der jeweiligen Brennkraftmaschine von der Referenzbrennkraftmaschine ermittelt. In den übrigen Betriebzuständen wird dann mittels des Korrekturwerts und des tatsächlichen Meßwerts die Größe bestimmt, die sich bei der Referenzbrennkraftmaschine einstellen würde. Diese so ermittelte Größe dient als Istwert für den Regelkreis.

Abhängig von der Ausführungsform kann als Istgröße unmittelbar die Sauerstoffkonzentration im Abgas oder die Differenz zwischen der Sauerstoffkonzentration mit Abgasrückführung und der Sauerstoffkonzentration ohne Abgasrückführung verwendet werden. Ferner kann entsprechend bei der Regelung einer anderen Größe, die die der Brennkraftmaschine zugeführte

Sauerstoffmenge charakterisiert, wie beispielsweise der Abgasrückführrate, der Luftmenge oder der rückgeführten Abgasmenge, vorgegangen werden.

Mit der Stellgröße wird bevorzugt ein Stellelement, das die der Brennkraftmaschine zugeführte Kraftstoffmenge und/oder die der Brennkraftmaschine zugeführte Sauerstoffmenge beeinflußt, beaufschlagt. Hierbei handelt es bevorzugt um Stellelemente zur Beeinflussung der rückgeführten Abasmenge.

Besonders vorteilhaft ist es, wenn die Vorgehensweise bei einer Meßgröße verwendet wird, die die Sauerstoffkonzentration im Abgas charakterisiert.

Bevorzugt sind die bestimmten Betriebszustände durch wenigstens die Drehzahl und die Einspritzmenge definiert. Besonders bevorzugt Betriebszustände, in denen keine Rückführung von Abgas erfolgt.

Eine besonders genaue Steuerung ergibt sich, wenn der Referenzwert und/oder die Messgröße abhängig von wenigstens einer Temperatur und/oder einer Druckgröße korrigiert wird. Dadurch können Einflüsse von der Temperatur und dem Luftdruck kompensiert werden.

Mit der erfindungsgemäßen Vorgehensweise ist eine Regelung der Abgasrückführrate bzw. der der Brennkraftmaschine zugeführten Frischluftmenge möglich, die es erlaubt, die Abgasemissionen deutlich zu reduzieren.

Weitere vorteilhafte und zweckmäßige Ausgestaltungen und Weiterbildungen der Erfindung sind in den Unteransprüchen gekennzeichnet.

### Zeichnung

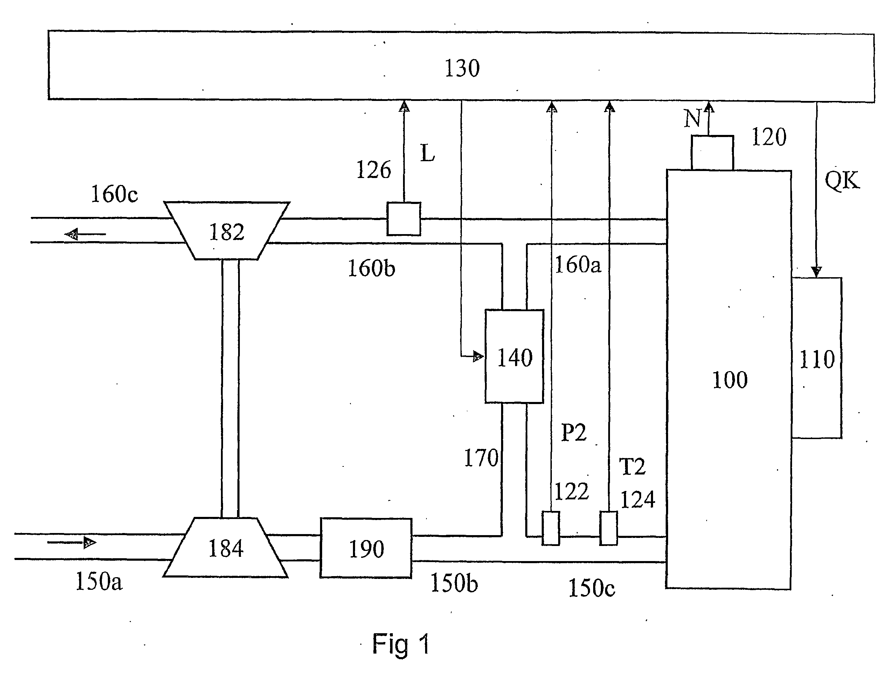

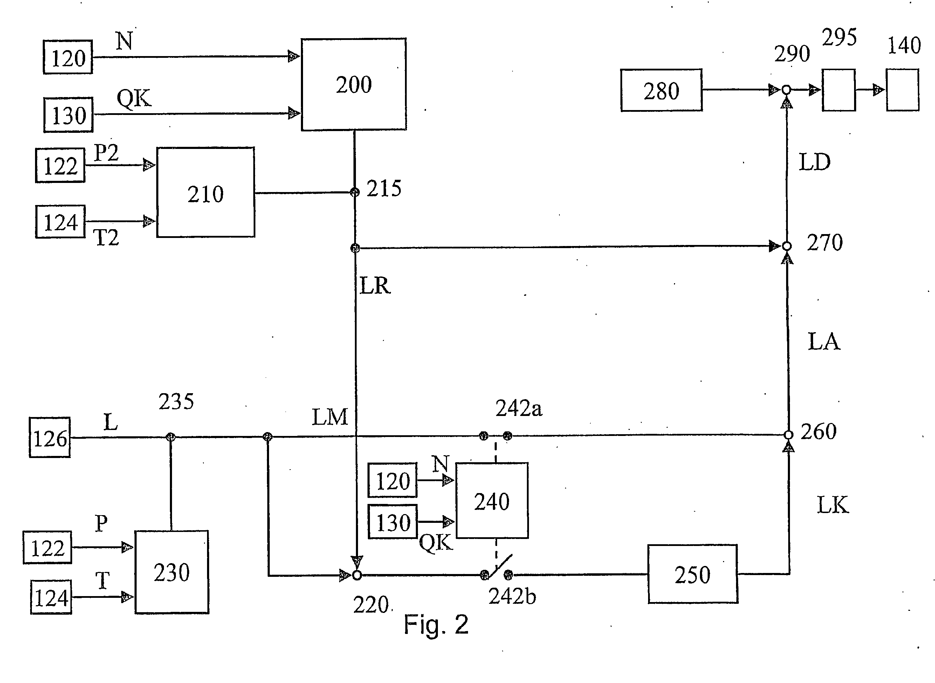

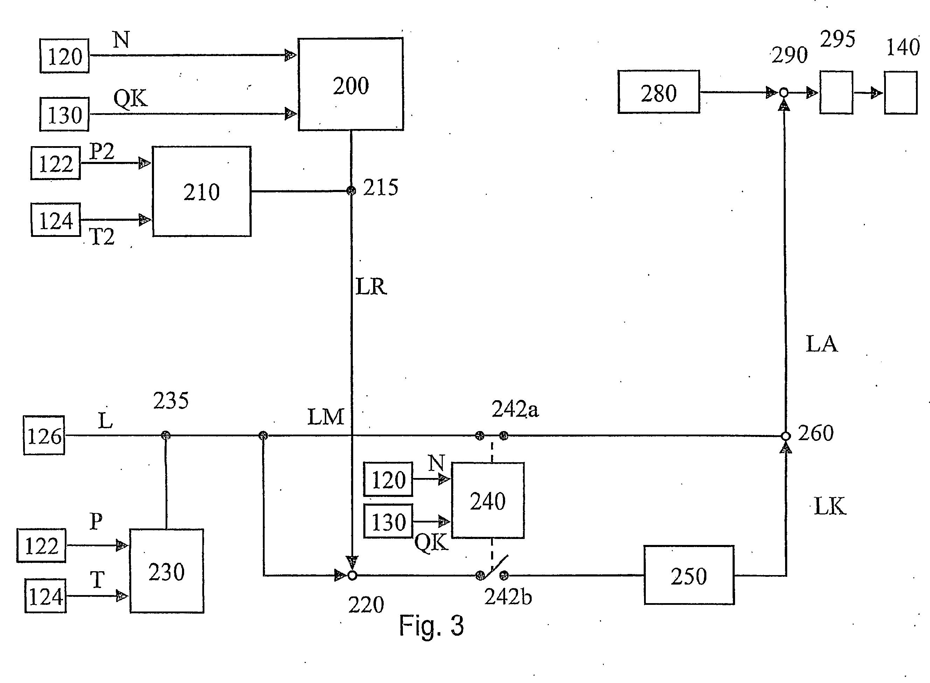

Die Erfindung wird nachstehend anhand der in der Zeichnung dargestellten Ausführungsformen erläutert. Es zeigen
Figur 1 ein Blockdiagramm des Gesamtsystems und die Figuren 2 und 3 jeweils eine Ausgestaltungen der erfindungsgemäßen Vorgehensweise.

### Beschreibung der Ausführungsbeispiele

In Figur 1 ist die Vorrichtung zur Steuerung einer Brennkraftmaschine 100 dargestellt. Der Brennkraftmaschine ist eine Kraftstoffzumesseinheit 110 zugeordnet. Desweiteren sind Sensoren 120 vorgesehen, die Betriebskenngrößen wie bspw. die Drehzahl der Brennkraftmaschine erfassen. Die Ausgangsgrößen der Sensoren gelangen zu einer Steuereinheit 130, die wiederum die Kraftstoffzumesseinheit 110 mit Ansteuersignale beaufschlagt, die bspw. die eingespritzte Kraftstoffmenge QK bestimmen.

Über eine Frischluftleitung 150 gelangt Frischluft in die Brennkraftmaschine und über ein Abgasleitung 160 werden die Abgase von der Brennkraftmaschine abgeleitet. Die Abgasleitung 160 und die Frischluftleitung 150 sind über eine Abgasrückführleitung 170 verbunden. Mittels einer im Bereich der Abgasrückführleitung angeordneten Abgasrückführstelleinheit 140 kann der Anteil des zurückgeführten Abgases und damit die Menge an der Brennkraftmaschine zugeführter Frischluft gesteuert werden.

In der Abgasleitung ist desweiteren eine Turbine 182 eines Turboladers angeordnet, die über eine Welle 186 einen Verdichter 184 antreibt, der in der Frischluftleitung angeordnet ist. Der Bereich nach der Turbine wird auch mit 160c, der Bereich zwischen Turbine und Abzweigung der Abgasrückführleitung 170 mit 160b, und der Bereich zwischen der Brennkraftmaschine und der Abzweigung mit 160a bezeichnet.

Ferner wird der Bereich der Frischluftleitung vor dem Verdichter mit 150a und der Bereich nach dem Verdichter mit 150b bezeichnet. In der Frischluftleitung, insbesondere nach dem Verdichter, in dem Leitungselement 150b oder 150c sowie in der Abgasrückführleitung 170 können Kühler 190 angeordnet sein, die die Gase abkühlen. In der Abgasleitung 160, vorzugsweise in dem Bereich 160b und/oder 160c, ist ein Sensor 126 angeordnet, der ein Signal bereitstellt, das die Sauerstoffkonzentration im Abgas charakterisiert.

In der Frischluftleitung 150c sind Sensoren 122 und 124 angeordnet, die Signale bezüglich des Druckes P2 und der Temperatur T2 der Luft erfassen, die der Brennkraftmaschine zugeführt wird.

Bei besonders vorteilhaften Ausgestaltungen können noch weitere Temperatur- und Drucksensoren vorgesehen sein, die andere Druckgrößen im Bereich der Abgasleitung und/oder der Frischluftleitung bzw. der Abgasrückführleitung erfassen.

Erfindungsgemäß ist vorgesehen, dass der Verdichter 184 die der Brennkraftmaschine zuzuführende Luft verdichtet und diese über die Frischluftleitung der Brennkraftmaschine gelangt. Die Abgase der Brennkraftmaschine strömen durch die Abgasleitung und die Turbine 182 und gelangen dann in die Umgebung.

Die Turbine 182 treibt über die Welle 186 den Verdichter an. Mittels der Abgasrückführstelleinheit kann ein Teil der Abgase der Frischluft in der Frischluftleitung zugemischt werden.

Die Abgasrückführstelleinheit 140 ist vorzugsweise als Ventil in der Abgasrückführleitung 170 ausgebildet. Alternativ und/oder ergänzend kann auch eine Drosselklappe in der Frischluftleitung, insbesondere im Abschnitt 150b, vorgesehen sein.

Die Steuereinheit 130 steuert über das Signal QK die Kraftstoffzumesseinheit 110 an. desweiteren steuert die Steuereinheit 130 die Abgasrückführstelleinheit 140 zur Einstellung der Abgasrückführrate an. Bei besonders vorteilhaften Ausgestaltungen können noch weitere Stellelemente zur Steuerung weiterer Größen vorgesehen sein.

Erfindungsgemäß ist vorgesehen, dass die Sauerstoffmenge im Abgas auf einen vorgegebenen Wert geregelt ist. Dadurch können die Abgasemissionen deutlich reduziert werden. Eine wesentliche Größe, die die Sauerstoffmenge beeinflusst, ist die Rate des rückgeführten Abgases. Die Rate des rückgeführten Abgases sollte so eingestellt sein, dass dem Motor lediglich die Sauerstoffmenge zugeführt wird, die er für eine emissionsoptimierte Verbrennung erfordert. Dazu ist es erforderlich, eine geregelte Abgasrückführung durchzuführen. Zur Regelung ist ein Luftmengenmesser nötig. Dieser ist sehr aufwendig, kostenintensiv und wegen der großen Luftmengen oft ungenau. Entsprechendes gilt für einen Sensor, der die rückgeführte Abgasmenge erfasst. Besonders einfach ist es, wenn die Regelung der Abgasrückführung über die Sauerstoffkonzentration im Abgas erfolgt.

Erfindungsgemäß ist vorgesehen, dass in bestimmten Betriebspunkten die vorzugsweise durch die Drehzahl und/oder die Einspritzmenge definiert sind, wird bei geschlossener Abgasrückführleitung, d.h. es erfolgt keine Abgasrückführung, das gemessene Lambda-Sondensignal LM mit Referenzwerten LR aus einem Kennfeld verglichen. Die Werte aus dem Kennfeld sind an einem Referenzmotor, dem sogenannten Goldenen Motor, ermittelt worden. Bei diesem Vergleich wird ein sogenannter Lernwert bestimmt. Mit diesem Lernwert LK wird das gemessene Lambda-Signal LM angepasst und somit auf die Werte des Referenzkennfeldes angeglichen.

Bei einer ersten Ausgestaltung wird ausgehend von dem Kennfeldwert, der die Sauerstoffmasse bei geschlossener Abgasrückführleitung charakterisiert, und dem angepassten Lambdawert LA bei geöffneter Drosselklappe ein Differenzwert LD gebildet. Dieser Differenzwert LD wird danach mit einem Sollwert verglichen und einem Regler zugeführt.

Bei einer zweiten Ausgestaltung ist vorgesehen, dass der angepasste Lambdawert LA unmittelbar auf einen Sollwert geregelt wird. Dieser Sollwert wurde ebenfalls für den Goldenen Motor ermittelt.

Bei einer besonders bevorzugten Ausgestaltung ist vorgesehen, dass das Ausgangssignal des Kennfeldes und/oder gemessene Wert LM der Lambda-Sonde bezüglich verschiedener Betriebsparameter wie vorzugsweise den Druck und der Temperatur der Luft korrigiert wird. Dies erfolgt vor dem Hintergrund, dass das Lambda-Signal von Druck und Temperatur abhängig ist. Insbesondere durch die Korrektur des Kennfeldes werden unterschiedliche Umgebungsbedingungen, wie bspw. Fahrten in großer Höhe, berücksichtigt.

Für die Ermittlung des Lernwertes LK muss die Abgasrückführleitung geschlossen sein. Dies geschieht bei einer Ausgestaltung aktiv, d.h. wenn bestimmte Betriebsbedingungen, insbesondere stationäre Betriebsbedingungen, erkannt werden, wird die Abgasrückführleitung aktiv geschlossen. Bei einer weiteren Ausgestaltung ist vorgesehen, dass im normalen Betrieb, wenn die Abgasrückführung geschlossen ist, z.B. bei Volllastbeschleunigung, die Adaption erfolgt. In diesem Fall ist eine dynamische Korrektur des Lambda-Sondensignales von Vorteil sein.

Als Lernwert LK wird in dem dargestellten Ausführungsbeispiel ein Quotient verwendet. Alternativ zu einem Quotienten kann auch eine Differenz oder eine sonstige mathematische Verknüpfung, z.B. Werte für eine Ebene oder ein Kennfeld, gewählt werden.

Der Vergleich zwischen dem Istwert und dem Sollwert kann mit der Differenz zwischen der geschlossenen und der geöffneten Abgasrückführung, oder Absolutwerte für das Lambda-Sondensignal durchgeführt werden.

Der Steller für die Abgasrückführung kann sowohl eine Drosselklappe, ein Abgasrückführregelventil und/oder ein Lader und/oder eine Kombination dieser Komponenten sein. Desweiteren kann die Steuerung um verschiedene Komponenten, wie bspw. eine Vorsteuerung, ergänzt werden.

In Figur 2 ist eine erste Ausführungsform der erfindungsgemäßen Vorgehensweise dargestellt. Bereits in Figur 1 beschriebene Elemente sind mit entsprechenden Bezugszeichen bezeichnet.

Einem Sauerstoffkonzentrationskennfeld 200 werden die Signale bezüglich der Drehzahl und der eingespritzten Kraftstoff QK zugeführt, die von dem Sensor 120 bereitgestellt werden bzw. intern in der Steuereinheit 130 vorliegen. Das Ausgangssignal LR des Kennfeldes 200 gelangt über einen Verknüpfungspunkt 215 zu einem Verknüpfungspunkt 220 und zu einem Verknüpfungspunkt 270. Am zweiten Eingang des Verknüpfungspunktes 215 liegt das Ausgangssignal einer ersten Drucktemperaturkompensation 210. Am zweiten Eingang des Verknüpfungspunktes 220 liegt das Ausgangssignal eines Verknüpfungspunktes 235. An einem ersten Eingang des Verknüpfungspunktes 235 liegt das Ausgangssignal L des Sensor 126, der ein Signal bereitstellt, das die Sauerstoffkonzentration im Abgas charakterisiert. Am zweiten Eingang des Verknüpfungspunktes 235 liegt das Ausgangssignal einer zweiten Drucktemperaturkompensation 230. Sowohl die erste als auch die zweite Drucktemperaturkompensation werden mit Signalen P2 und T2 der Sensoren 122 bzw. 124 beaufschlagt, die Druck- und Temperaturwerte bereitstellen.

Das Ausgangssignal L des Verknüpfungspunktes 235 gelangt ferner über ein erstes Schaltmittel 242a zu einem Verknüpfungspunkt 260. Das Ausgangssignal des Verknüpfungspunktes 220 gelangt ebenfalls über ein Schaltmittel 242b und einen Filter 250 zu dem Verknüpfungspunkt 260. Die Schaltmittel 242a und 242b werden von einer Logik 240, der Signale bezüglich der Drehzahl und/oder der Kraftstoffmenge zugeführt werden, angesteuert. Das Ausgangssignal LA des Verknüpfungspunktes 260 gelangt an den zweiten Eingang des Verknüpfungspunktes 270. Das Ausgangssignal LD des Verknüpfungspunktes 270 gelangt zu einem Verknüpfungspunkt 290, an dessen zweiten Eingang das Ausgangssignal einer Sollwertvorgabe 280 anliegt. Der Sollwertvorgabe werden vorzugsweise die gleichen Größen wie dem Sauerstoffkonzentrationskennfeld 200 zugeleitet. Mit dem Ausgangssignal des Verknüpfungspunktes wird ein Regler 295 beaufschlagt, der wiederum verschiedene Stellelemente zur Beeinflussung der Sauerstoffkonzentration im Abgas beaufschlagt. Hierbei handelt es sich vorzugsweise um den Abgasrückführsteller 140.

In dem Sauerstoffkonzentrationskennfeld 200 ist ein Referenzwert LR für die Sauerstoffkonzentration im Abgas abgelegt. Dieser Wert gibt die Sauerstoffkonzentration im Abgas einer Brennkraftmaschine bei bestimmten Betriebsbedingungen, die in dem Ausführungsbeispiel durch die Drehzahl und die eingespritzte Kraftstoffmenge charakterisiert sind, an. Bei der dargestellten Ausführungsform handelt es sich hier Betriebszustände, in denen keine Rückführung von Abgas von der Abgasleitung in die Frischluftleitung erfolgt. Anstelle der Drehzahl und/oder der Kraftstoffmenge können auch andere Größen, die diese Größen charakterisieren, sowie zusätzliche Größen berücksichtigt werden. Vorzugsweise gibt der Referenzwert die Sauerstoffkonzentration im Abgas für einen Referenzmotor an.

Mit diesem Referenzwert wird der gemessene Wert LM der Sauerstoffkonzentration im Verknüpfungspunkt 220 verglichen. Der Referenzwert LR stellt sich lediglich dann ein, wenn keine Abgasrückführung erfolgt. Es ist vorgesehen, dass der Vergleich mit dem gemessenen Wert LM für die Sauerstoffkonzentration nur durchgeführt wird, wenn keine Abgasrückführung erfolgt. Dies wird dadurch berücksichtigt, dass das Schaltmittel 242 von der Logik 240 entsprechend angesteuert wird. In Betriebszuständen, in denen eine Abgasrückführung erfolgt, wird daher die gemessene Sauerstoffkonzentration LM mit dem Referenzwert LR verglichen. Dieses Vergleichsergebnis wird gefiltert. Vorzugsweise wird mittels eines Tiefpassfilters 250 ein Mittelwert gebildet. Ausgehend von diesem Wert wird ein Korrekturwert LK gebildet. Dieser Korrekturwert LK gibt die Abweichung des gemessenen Wertes für die Sauerstoffkonzentration von dem erwarten Wert an, der sich bei dem Referenzmotor einstellen würde. Dieser Korrekturwert LK wird in Betriebszuständen erfasst, bei denen keine Abgasrückführung erfolgt und in allen Betriebszuständen zur Korrektur des gemessenen Wertes LM verwendet. Hierzu wird bei Betriebszuständen, in denen der Wert nicht gelernt wird, d.h. in Betriebszuständen mit Abgasrückführung, das Schaltmittel 242a geschlossen und das Schaltmittel 242b geöffnet.

Im Verknüpfungspunkt 260 wird der gemessene Wert LM mit dem Korrekturwert LK korrigiert. In der dargestellten Ausführungsform der Figur 2 wird ein Koeffizient gebildet mit dem der gemessene Wert multipliziert wird. Am Ausgang des Verknüpfungspunktes 260 steht der angepasste Wert LA für die Sauerstoffkonzentration zur Verfügung. Dieser Wert LA gibt in allen Betriebszuständen, also auch mit Abgasrückführung, die auf den Referenzmotor normierte Sauerstoffkonzentration im Abgas an. Im Verknüpfungspunkt 270 wird dieser Wert mit dem Wert der Sauerstoffkonzentration LR des Referenzmotors ohne Abgasrückführung verglichen. Dieses Signal LD wird dann mit einem Sollwert im Verknüpfungspunkt 290 verglichen und dem Regler 295 zugeführt. Dies bedeutet, in der Sollwertvorgabe 280 ist der Sollwert für die Differenz zwischen Sauerstoffkonzentration mit und ohne Abgasrückführung abgelegt. Auf diesen Sollwert wird dann die tatsächliche Differenz zwischen den Sauerstoffkonzentration mit Abgasrückführung und der Sauerstoffkonzentration ohne Abgasrückführung eingeregelt.

In Figur 3 wird eine weitere, besonders vorteilhafte Ausführungsform dargestellt. Entsprechende Blöcke sind mit entsprechenden Bezugszeichen bezeichnet. Die Ausführungsform der Figur 3 unterscheidet sich im Wesentlichen von der Ausführungsform der Figur 2 darin, dass nicht auf die Differenz zwischen der Sauerstoffkonzentration mit und ohne Abgasrückführung geregelt wird, sondern dass auf die angepasste Sauerstoffkonzentration LA geregelt wird. Dies bedeutet, dass in der Sollwertvorgabe 280 der Sollwert für Lambda-Konzentration ohne Abgasrückführung für den Referenzmotor abgelegt ist.

Beiden Ausführungsformen gemeinsam ist, dass das Ausgangssignal des Sensors auf Wert normiert wird, der sich bei einem Referenzmotor einstellen würde. Dieses normierte Signal oder eine ausgehend von diesem normierten Signal berechnete Größe wird dann als Istwert für eine Regelung verwendet. Besonders vorteilhaft ist hierbei, dass das Kennfeld 280 für den Sollwert der Regelung, nicht auf die jeweilige Brennkraftmaschine abgestimmt werden muß. Für alle Brennkraftmaschinen können die selben Kennfeldwerte verwendet werden, dadurch wird der Aufwand im Rahmen der Applikation deutlich verringert. Die Abweichungen der jeweiligen Brennkraftmaschine von der Referenzbrennkraftmaschine wird durch den Lernwert kompensiert.

Von besonderer Bedeutung sind weiterhin die Realisierungen in Form eines Computerprogramms mit Programmcode-Mitteln und in Form eines Computerprogrammprodukts mit Programmcode-Mitteln. Das erfindungsgemäße Computerprogramm weist Programmcode-Mittel auf, um alle Schritte des erfindungsgemäßen Verfahrens durchzuführen, wenn das Programm auf einem Computer, insbesondere einem Steuergerät für eine Brennkraftmaschine eines Kraftfahrzeugs, ausgeführt wird. In diesem Fall wird also die Erfindung durch ein in dem Steuergerät abgespeichertes Programm realisiert, so dass dieses mit dem Programm versehene Steuergerät in gleicher Weise die Erfindung darstellt wie das Verfahren, zu dessen Ausführung das Programm geeignet ist. Das erfindungsgemäße Computerprogrammprodukt weist Programmcode-Mittel auf, die auf einem computerlesbaren Datenträger gespeichert sind, um das erfindungsgemäße Verfahren durchzuführen, wenn das Programmprodukt auf einem Computer, insbesondere einem Steuergerät für eine Brennkraftmaschine eines Kraftfahrzeugs ausgeführt wird. In diesem Fall wird also die Erfindung durch einen Datenträger realisiert, so dass das erfindungsgemäße Verfahren ausgeführt werden kann, wenn das Programmprodukt bzw. der Datenträger in ein Steuergerät für eine Brennkraftmaschine insbesondere eines Kraftfahrzeugs integriert wird. Als Datenträger bzw. als Computerprogrammprodukt kann insbesondere ein elektrisches Speichermedium zur Anwendung kommen, beispielsweise ein Read-Only-Memory (ROM), ein EPROM oder auch ein elektrischer Permanentspeicher wie beispielsweise eine CD-ROM oder DVD.

## Patentansprüche

1. Verfahren zur Steuerung einer Brennkraftmaschine, wobei ausgehend von dem Vergleich eines Sollwertes mit einem Istwert für eine Größe, die die zugeführte Sauerstoffmenge charakterisiert, eine Stellgröße zur Ansteuerung eines Stellelementes vorgegeben wird, das die der Brennkraftmaschine zugeführte Kraftstoffmenge und/oder die der Brennkraftmaschine zugeführte Sauerstoffmenge beeinflusst, **dadurch gekennzeichnet, dass** ein Referenzwert abhängig von Drehzahl und eingespritzter Kraftstoffmenge vorgegeben wird und dass in bestimmten Betriebszuständen ein Korrekturwert ausgehend von der Abweichung zwischen einer Messgröße, die die Sauerstoffkonzentration im Abgas charakterisiert, und dem Referenzwert ermittelt wird und dass die Messgröße mit dem Korrekturwert korrigiert wird.

2. Verfahren nach einem der Ansprüche 2 oder 3, **dadurch gekennzeichnet, dass** der Korrekturwert die Abweichung zwischen einer Referenzbrennkraftmaschine und der Brennkraftmaschine charakterisiert.

3. Verfahren nach einem der Ansprüche 2 bis 4, **dadurch gekennzeichnet, dass** mittels des Korrekturwerts der Istwert auf den Referenzwert normiert wird.

4. Verfahren nach einem der Ansprüche 2 bis 5, **dadurch gekennzeichnet, dass** die bestimmten Betriebszustände durch wenigstens die Drehzahl und die Einspritzmenge definiert sind.

5. Verfahren nach einem der Ansprüche 2 bis 6, **dadurch gekennzeichnet, dass** in den bestimmten Betriebszuständen keine Rückführung von Abgas erfolgt.

6. Verfahren nach einem der Ansprüche 2 bis 7, **dadurch gekennzeichnet, dass** der Sensor zur Ermittlung der Messgröße einer Abgasleitung und/oder in einer Frischluftleitung nach der Einmündung einer Abgasrückführleitung angeordnet ist.

7. Verfahren nach einem der vorherigen Ansprüche, **dadurch gekennzeichnet, dass** der Referenzwert und/oder die Messgröße abhängig von wenigstens einer Temperatur und/oder einer Druckgröße korrigiert wird.

8. Vorrichtung zur Steuerung einer Brennkraftmaschine, mit Mitteln, die ausgehend von dem Vergleich eines Sollwertes mit einem Istwert für eine Größe, die die zugeführte Sauerstoffmenge charakterisiert, eine Stellgröße zur Ansteuerung eines Stellelementes vorgeben, das die der Brennkraftmaschine zugeführte Kraftstoffmenge und/oder die der Brennkraftmaschine zugeführte Sauerstoffmenge beeinflusst, **dadurch gekennzeichnet, dass** ein Kennfeld ein Referenzwert abhängig von Drehzahl und eingespritzter Kraftstoffmenge vorgibt, dass Mittel vorgesehen sind, die in bestimmten Betriebszuständen ein Korrekturwert ausgehend von der Abweichung zwischen einer Messgröße, die die Sauerstoffkonzentration im Abgas charakterisiert, und dem Referenzwert ermitteln und die die Messgröße mit dem Korrekturwert korrigieren.

9. Computerprogramm mit Programmcode-Mitteln, um alle Schritte von jedem beliebigen der Ansprüche 1 bis 11 durchzuführen, wenn das Programm auf einem Computer, insbesondere einem Steuergerät für eine Brennkraftmaschine, ausgeführt wird.

10. Computerprogrammprodukt mit Programmcode-Mitteln, die auf einem computerlesbaren Datenträger gespeichert sind, um das Verfahren nach jedem beliebigen der Ansprüche 1 bis 11 durchzuführen, wenn das Programmprodukt auf einem Computer, insbesondere einem Steuergerät für eine Brennkraftmaschine, ausgeführt wird.

## Claims

1. Method for controlling an internal combustion engine, wherein, on the basis of the comparison of a setpoint value with an actual value for a variable which characterizes the supplied quantity of oxygen, a manipulated variable for actuating an actuator element which influences the quantity of fuel supplied to the internal combustion engine and/or the quantity of oxygen supplied to the internal combustion engine is predefined, **characterized in that** a reference value is predefined as a function of the rotational speed and injected quantity of fuel, and **in that** in specific operating states a correction value is determined on the basis of the difference between a measurement variable which characterizes the concentration of oxygen in the exhaust gas and the reference value, and **in that** the measurement variable is corrected with the correction value.

2. Method according to one of Claims 2 and 3, **characterized in that** the correction value characterizes the difference between a reference internal combustion engine and the internal combustion engine.

3. Method according to one of Claims 2 to 4, **characterized in that** the actual value is standardized to the reference value by means of the correction value.

4. Method according to one of Claims 2 to 5, **characterized in that** the specific operating states are defined by at least the rotational speed and the injection quantity.

5. Method according to one of Claims 2 to 6, **characterized in that** exhaust gas is not.fed back in the specific operating states.

6. Method according to one of Claims 2 to 7, **characterized in that** the sensor for determining the measurement variable of an exhaust line and/or in a fresh air line is arranged, downstream of the junction with an exhaust gas feedback line.

7. Method according to one of the preceding claims, **characterized in that** the reference value and/or the measurement variable is/are corrected as a function of at least one temperature and/or one pressure variable.

8. Device for controlling an internal combustion engine, having means which, on the basis of the comparison of a setpoint value with an actual value for a variable which characterizes the supplied quantity of oxygen, predefine a manipulated variable for actuating an actuator element which influences the quantity of fuel supplied to the internal combustion engine and/or the quantity of oxygen supplied to the internal combustion engine, **characterized in that** a characteristic diagram predefines a reference value as a function of the rotational speed and injected quantity of fuel, **in that** means are provided which in specific operating states determine a correction value on the basis of the difference between a measurement variable which characterizes the concentration of oxygen in the exhaust gas and the reference value and which correct the measurement variable with the correction value.

9. Computer program having program encoding means for carrying out all the steps of any of Claims 1 to 11 when the program is executed on a computer, in particular a control device for an internal combustion engine.

10. Computer program product having program encoding means which are stored on a computer-readable data carrier for carrying out the method according to any of Claims 1 to 11 when the program product is executed on a computer, in particular a control device for an internal combustion engine.

## Revendications

1. Procédé de gestion d'un moteur à combustion interne selon lequel, partant de la comparaison entre une valeur de consigne et une valeur réelle d'une grandeur caractérisant la quantité d'oxygène fournie, on prédéfinit une grandeur de réglage pour commander un élément d'actionnement, qui influence la quantité de carburant alimentant le moteur à combustion interne et/ ou la quantité de carburant fournie au moteur à combustion interne,
**caractérisé en ce qu'**
on prédéfinit une valeur de référence dépendant de la vitesse de rotation et de la quantité de carburant injectée et
dans certains états de fonctionnement on détermine une valeur de correction à partir de la déviation entre une grandeur de mesure caractérisant la concentration en oxygène dans les gaz d'échappement et la valeur de référence et
on corrige cette valeur de mesure avec la valeur de correction.

2. Procédé selon l'une des revendications 1 et 2,
**caractérisé en ce que**
la valeur de correction caractérise la déviation du moteur à combustion interne par rapport à un moteur à combustion interne de référence.

3. Procédé selon l'une des revendications 2 à 4,
**caractérisé en ce qu'**
à l'aide de la valeur de correction on normalise la valeur réelle sur la valeur de référence.

4. Procédé selon l'une des revendications 2 à 3,
**caractérisé en ce que**
les états de fonctionnement déterminés sont définis au moins par la vitesse de rotation et la quantité injectée.

5. Procédé selon l'une des revendications 2 à 4,
**caractérisé en ce que**
dans les états de fonctionnement déterminés, il n'y a pas de recyclage des gaz d'échappement.

6. Procédé selon l'une des revendications 2 à 5,
**caractérisé en ce que**
le capteur pour déterminer la grandeur de mesure est associé à une conduite de gaz d'échappement et/ou à une conduite d'air frais après le débouché dans une conduite de recyclage des gaz d'échappement.

7. Procédé selon l'une des revendications précédentes,
**caractérisé en ce qu'**
on corrige la valeur de référence et/ou la grandeur de mesure en fonction d'au moins une température et/ou une grandeur de pression.

8. Dispositif de gestion d'un moteur à combustion interne comprenant des moyens qui, partant de la comparaison d'une valeur de consigne et d'une valeur réelle d'une grandeur caractérisant la quantité d'oxygène fournie, prédéfinissent une grandeur de réglage pour commander un élément d'actionnement qui influence la quantité de carburant et/ ou la quantité d'oxygène fournies au moteur à combustion interne,
**caractérisé en ce qu'**
un champ de caractéristiques prédéfinit une valeur de référence en fonction de la vitesse de rotation et de la quantité de carburant injectée, et
des moyens, qui dans des états de fonctionnement déterminés, fournissent une valeur de correction à partir de la déviation entre une grandeur de mesure caractérisant la concentration en oxygène dans les gaz d'échappement et la valeur de référence et corrigent la grandeur de mesure avec cette valeur de correction.

9. Programme d'ordinateur comportant des moyens de code de programme pour effectuer toute les étapes de l'une quelconque des revendications 1 à 11 lorsque le programme est exécuté par un ordinateur, notamment un appareil de gestion d'un moteur à combustion interne.

10. Produit-programme d'ordinateur avec des moyens de code de programme enregistrés sur un support de données compatible en lecture avec un ordinateur pour exécuter le procédé selon chacune des revendications 1 à 11, lorsque le produit programme est exécuté sur un ordinateur, notamment dans un appareil de gestion d'un moteur à combustion interne.
